# EUROPEAN PATENT APPLICATION

(11) **EP 3 936 329 A1**
(43) Date of publication of application: **12.01.2022**
(21) Application number: 20766603.3
(22) Date of filing: 14.02.2020
(51) Int. Cl.: B32B 5/16, C09D 183/04, C09D 7/62

(54) **LAMINATION FILM**

(30) Priority: 07.03.2019 JP 2019041705
(71) Applicant: TOYOBO CO., LTD., Osaka-shi Osaka 530-8230 (JP)
(72) Inventor: TATSUTA, Masako, Otsu-shi, Shiga 520-0292 (JP); TERAMOTO, Yoshihiko, Otsu-shi, Shiga 520-0292 (JP); ITO, Katsuya, Osaka-shi, Osaka 530-8230 (JP); HAYASHI, Miyuki, Otsu-shi, Shiga 520-0292 (JP)
(74) Representative: Vossius & Partner Patentanwälte Rechtsanwälte mbB
(86) International application number: PCT/JP2020/005779
(87) International publication number: WO 2020/179412

(57) **Abstract**

[PROBLEM] To provide a laminated film having a coating layer surface which exhibits superior water-repellent and/or oil-repellent characteristics. [SOLUTION MEANS] A laminated film in which a coating layer is laminated, directly or indirectly by way of another layer, over a substrate film, the laminated film being such that the coating layer is an outermost layer on at least one face of the laminated film, and hydrophobic oxide particles of average primary particle diameter not less than 10 nm but not greater than 300 nm are present in the coating layer in an amount that in terms of solids content is not less than 30 mass% but not greater than 100 mass%.

## Description

### TECHNICAL FIELD

The present invention relates to a laminated film. More specifically, it relates to a coating laminated film having water-repellent and/or oil-repellent characteristics.

### BACKGROUND ART

Materials which exhibit water-repellent and/or oil-repellent characteristics at the surfaces thereof are industrially important in fields where antifouling characteristics are required. To achieve antifouling characteristics, it is necessary to reduce interaction between the material surface and contaminants, it ordinarily being the case that this is normally accomplished by causing the material surface to be water-repellent and/or oil-repellent.

Conventionally known as water-repellent treatment methods for achieving water-repellent characteristics are methods in which a film surface is imparted with a substance having a surface energy which is lower than that of water such as a fluororesin, silicone resin, or the like, in addition to which there are methods in which fine surface irregularities are formed on the film surface.

Patent Reference No. 1 describes a method for causing the surfacemost portion of a film to be a wet-coated with a fluorocompound layer to give it water-repellent characteristics and/or antifouling characteristics. However, with such coating methods there has been the problem that adhesion to the substrate is poor and endurance is low. To solve such problems, use of a silica layer which has low surface energy and which exhibits superior water-repellent characteristics and antifouling characteristics has been investigated. However, where a support body has been coated with a silica layer having water-repellent characteristics and antifouling characteristics, there has been the problem that the low surface energy of the silica layer has caused there to be low adhesive force between it and the support body. This being the case, to improve adhesion between the support body and the surface silica layer, Patent Reference No. 2 describes a method in which adhesion between a support body and a surface silica layer is improved by causing a silica layer which has high surface energy to be provided between the surface silica layer and the support body. However, there has been the problem that this adhesion has been inadequate, and the water-repellent characteristics of the surface have also been unstable. Furthermore, to achieve water-repellent characteristics, Patent Reference No. 3 describes a film at which fine surface irregularities are formed on the surface, but this has had the problem that the manufacturing method thereof has been complicated. And while formation of a surface having water-repellent characteristics and oil-repellent characteristics came to be of interest from the standpoint of applications involving antifouling characteristics and the like, it turns out that formation of a surface such as might simultaneously achieve both such properties is not an easy matter. Described at Patent Reference No. 4 is a film having a surface that exhibits both water-repellent and oil-repellent characteristics. However, the properties of that film material in terms of its smoothness, transparency, and so forth have been inadequate.

### PRIOR ART REFERENCES

### PATENT DOCUMENTS

Patent Reference No. 1: Japanese Patent Application Publication Kokai No. 2000-284102
Patent Reference No. 2: Japanese Patent Application Publication Kokai No. 2002-113805
Patent Reference No. 3: Japanese Patent Application Publication Kokai No. 2018-103534
Patent Reference No. 4: Japanese Patent Application Publication Kokai No. 2007-138027

### SUMMARY OF THE INVENTION

### PROBLEM TO BE SOLVED BY INVENTION

The present invention was conceived with such problems of the conventional art as background. That is, it is an object of the present invention to provide a laminated film having a coating layer surface which exhibits superior water-repellent and/or oil-repellent characteristics.

### MEANS FOR SOLVING PROBLEM

As a result of intensive efforts, the present inventor(s) arrived at the present invention upon discovering that the foregoing problem(s) could be solved by the means indicated below. That is, the present invention is constituted as follows.
1. A laminated film in which a coating layer is laminated, directly or indirectly by way of another layer, over a substrate film, the laminated film being such that the coating layer is an outermost layer on at least one face of the laminated film, and hydrophobic oxide particles of average primary particle diameter not less than 10 nm but not greater than 300 nm are present in the coating layer in an amount that in terms of solids content is not less than 30 mass% but not greater than 100 mass%.
2. The laminated film according to 1, above, wherein the hydrophobic oxide particles are hydrophobic silica.
3. The laminated film according to 1 or 2, above, wherein in terms of solids content the hydrophobic oxide particles within the coating layer are 50 mass% to 100 mass% thereof.
4. The laminated film according to any of 1 through 3, above, wherein the coating layer contains a siloxane-type inorganic macromolecule.
5. The laminated film according to any of 1 through 4, above, wherein a contact angle of diiodomethane measured at a surface of the coating layer is not less than 60°.
6. The laminated film according to any of claims 1 through 5 wherein haze is not greater than 20%.

### BENEFIT OF THE INVENTION

By virtue of the fact that a laminated film in accordance with the present invention is provided with at least a substrate layer and a coating layer, and the coating layer contains hydrophobic oxide particles, water-repellent and/or oil-repellent characteristics at the laminated film coating layer surface are satisfactory. Moreover, it has superior transparency due to the fact that the hydrophobic oxide particles are of small size.

### BRIEF DESCRIPTION OF DRAWINGS

[FIG. 1] (A), (B), and (C) are sectional schematic views showing an example of the constitution of a laminated film in accordance with the present invention.
[FIG. 2] This is a sectional schematic view showing an example of the constitution of a conventional laminated film.

### EMBODIMENTS FOR CARRYING OUT THE INVENTION

The present invention is described in detail below. The present invention provides a laminated film which has useful water-repellent and/or oil-repellent characteristics and which exhibits superior antifouling characteristics. That is, it makes it possible to provide a laminated film in which a coating layer is laminated, directly or indirectly by way of other layer(s), over a substrate film, wherein causing the coating layer to be an outermost layer on at least one face of the laminated film, and causing hydrophobic oxide particles of average primary particle diameter not less than 10 nm but not greater than 300 nm to be present in the coating layer in an amount that in terms of solids content is not less than 30 mass% but not greater than 100 mass%, makes it possible for a surfacemost portion of the film to exhibit water-repellent characteristics and oil-repellent characteristics, and also makes it possible for the laminated film to have high transparency. The present invention includes embodiments in which the hydrophobic oxide particles themselves are imparted with coating-forming characteristics, in which case it will be possible to carry out coating in situations in which the hydrophobic oxide particles are present only in the form of the solids content thereof without the need for any substantial presence of binder component within the coating liquid, such that the coating layer is formed only from hydrophobic oxide particles.

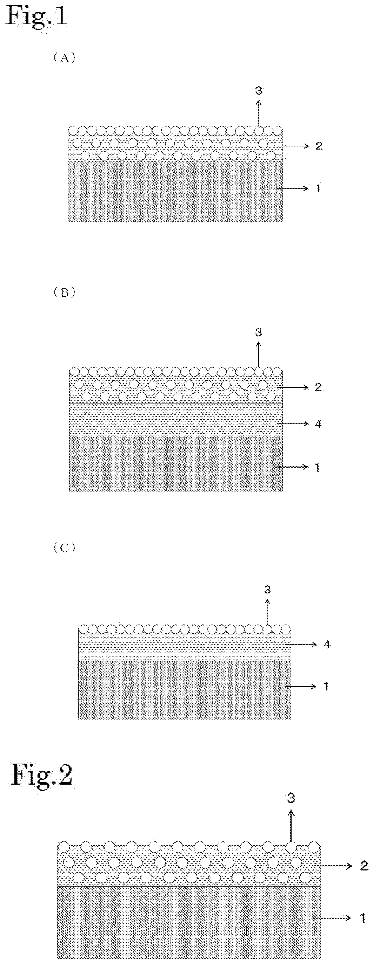

(A) through (C) at FIG. 1 are sectional schematic views which show the structure of a laminated film in accordance with the present invention. Reference numeral 1 indicates a substrate film; reference numeral 2 indicates a coating layer comprising binder component(s) and hydrophobic oxide particles; reference numeral 3 indicates hydrophobic oxide particles; and reference numeral 4 indicates an optional resin layer that does not contain hydrophobic oxide particles. The binder component(s) that make up the optional resin layer of reference numeral 4 may be the same as or different from the binder component(s) within the coating layer comprising binder component(s) and hydrophobic oxide particles at reference numeral 2. At (A) through (C) at FIG. 1, the surfacemost portion thereof is substantially covered with hydrophobic oxide particles. In actuality, while the entire 100% of the area of the surfacemost portion of the coating layer need not necessarily be covered thereby, a significant fraction of the surfacemost portion of the coating layer is covered with hydrophobic oxide particles. In contrast, FIG. 2 shows a sectional schematic view of a typical conventional item, at which while there are hydrophobic oxide particles which are present throughout the coating layer, there are locations at the surfacemost portion thereof which are not covered by hydrophobic oxide particles.

Substrate Film A laminated film in accordance with the present invention possesses substrate film(s). While there is no particular with respect to the material(s) of such substrate film(s), it is preferred from the standpoint of plasticity and/or other such aspects of handling characteristics that it be resin film(s). As resin(s) that may make up the resin film, polyethylene, polypropylene, polystyrene, diene-type polymers, and other such polyolefins, polyethylene terephthalate, polypropylene terephthalate, polybutylene terephthalate, polyethylene naphthalate, and other such polyesters, nylon 6, nylon 6,6, nylon 6,10, nylon 12, and other such polyamides, polymethyl methacrylate, polymethacrylic acid esters, polymethyl acrylate, polyacrylic acid esters, and other such acrylate-type resins, polyacrylic acid-type resins, polymethacrylic acid-type resins, polyurethane-type resins, cellulose acetate, ethyl cellulose, and other such cellulose-type resins, polyarylate, aramid, polycarbonate, polyphenylene sulfide, polyphenylene oxide, polysulfone, polyether sulfone, polyether ether ketone, polyether imide, polyimide, polyamide imide, polybenzimidazole, polybenzoxazole, polybenzthiazole, and other such aromatic-type hydrocarbon-type polymers, polytetrafluoroethylene, polyvinylidene fluoride, and other such fluororesins, epoxy resins, phenolic resins, novolak resins, benzoxazine resins. and the like may be cited as examples. Furthermore, copolymer(s) may be employed in which portion(s) of constituent unit(s) in the form of resin(s) such as the foregoing is/are replaced with other constituent unit(s). Thereamong, from the standpoints of transparency and dimensional stability, it is preferred that it be a film comprising polyester resin(s) and/or acrylate resin(s). As polyester resins, polyethylene terephthalate, polypropylene terephthalate, polybutylene terephthalate, polyethylene naphthalate, and so forth may be cited as specific examples. Thereamong, from the standpoint of striking a balance between properties and cost, use of polyethylene terephthalate is preferred.

The substrate film may be a single-layer film or may be a film in which two or more layers are laminated together. Where two or more layers are laminated together, the film may be such that that layers therein are of the same and/or different type(s). Furthermore, resin composition(s) may be laminated at the substrate film. Moreover, to the extent that it does not prevent the effect of the present invention from being provided, any of various additives may where necessary be present within the substrate film. As additives, antioxidants, light-resistant agents, antigelling agents, organic wetting agents, antistatic agents, ultraviolet light absorbers, surface active agents, and so forth may be cited as examples. Where the substrate film is made up of two or more layers, additional substance(s) may be present therein in correspondence to the functions of the various layers. To improve slippery, wrappability, and/or other such handling characteristics of the substrate film, inert particles may be present in the substrate film.

While there is no particular limitation with respect to the thickness of the substrate film of the present invention, it is preferred that this be not less than 5 µm but not greater than 300 µm. It is more preferred that this be not less than 10 µm but not greater than 280 µm, and still more preferred that this be not less than 12 µm but not greater than 260 µm. Causing this to be not less than 12 µm will facilitate application of the coating layer during lamination; causing this to be not greater than 260 µm is advantageous in terms of cost.

While the surface of the substrate film may be used in its untreated state, surface treatment may be carried out to improve adhesion with respect to the coating layer. More specifically, it is possible to employ a substrate film which has been provided with an anchor coating layer (easy-to-adhere layer) and/or at which plasma treatment, corona treatment, flame treatment, and/or other such surface treatment has been carried out.

### Hydrophobic Oxide Particles

A coating layer at a laminated film in accordance with the present invention contains hydrophobic oxide particles. There is no particular limitation with respect to these hydrophobic oxide particles so long as they possess hydrophobicity, it being possible, for example, to employ hydrophilic oxide particles that have been made hydrophobic as a result of surface treatment. That is, it is possible to employ hydrophilic oxide particles that have been subjected to surface treatment through use of a silane coupling agent and/or any other desired reagent(s) such that the surfaces thereof have been made hydrophobic.

There is no particular limitation with respect to the type(s) of oxide employed. For example, at least one oxide selected from among silica (silicon dioxide), alumina, titania, and so forth may be employed. This or these may be synthesized by way of any desired compound(s), and/or known and/or commercially available substance(s) may be used. Among such oxides, silica particles may in particular be favorably employed.

As methods for causing silica particles to be hydrophobic, surface treatment through use of silicone oil, silane coupling agent, silazane, and/or any other of various types of known reagents may be favorably employed. In particular, from the standpoint of exhibiting superior water-repellent and/or oil-repellent characteristics, introduction at the surface thereof of a trimethylsilyl group, a phenyl group, a styryl group, a cyclohexyl group, a vinyl group, an alkynyl group, an alkenyl group, an alkyl group as typified by an octyl group, a tert-butyl group, a sec-butyl group, an isobutyl group, an n-butyl group, an isopropyl group, an n-propyl group, an ethyl group, a methyl group, and so forth, a fluorofunctional group as typified by a 3,3,3-trifluoropropyl group, a 1H,1H,2H,2H-perfluorohexyl group, a 1H,1H,2H,2H-perfluorodecyl group, a 1H,1H,2H,2H-perfluorooctyl group, and so forth, and/or the like are preferred. Of these, because it will permit more superior water-repellent and/or oil-repellent characteristics to be exhibited, hydrophobic silica at which a trimethylsilyl group has been introduced is more preferred.

Size of the hydrophobic oxide particles of the present invention is such that the average primary particle diameter thereof is not less than 10 nm but not greater than 300 nm, it being preferred that this be not less than 10 nm but not greater than 200 nm, and more preferred that this be not less than 10 nm but not greater than 100 nm. By causing average primary particle diameter to be within the foregoing range(s), transparency of the laminated film will not be impaired notwithstanding that a coating layer may be laminated at the substrate film. Note that average primary particle diameter size in the context of the present invention may be determined as a result of microscopic morphological observation using a scanning electron microscope, transmission electron microscope, or the like. More specifically, the average of the diameters of 20 arbitrarily selected particles as observed using such a microscope may be taken to be the average primary particle diameter. The average primary particle diameter of particles of irregular shape may be calculated based on the equivalent circular diameters thereof. Equivalent circular diameter is calculated by dividing the observed area of the particle by π, taking the square root of this, and multiplying the result by two.

### Method of Synthesizing Oxide Particles

Where "hydrophobic oxide particles" are referred to in the context of the present invention, one might ordinarily think that these could just as easily be referred to as "hydrophobic metal oxide particles". However, e.g., with respect to silica which is mentioned below, because whether this would be included within the scope of the term "metal oxides" is subject to various interpretations, reference is simply made herein to "oxides". Particles synthesized using the wet method, dry method, and/or other such known methods may be employed as the oxide particles of the present invention. Thereamong, the sol-gel method is known as a method for manufacturing silica, titania, zirconia, alumina, and other such oxide particles. In accordance with this manufacturing method, oxide particles are obtained by carrying out polycondensation and a hydrolysis reaction of a metal alkoxide in a water-containing organic solvent in the presence of an acidic catalyst or a basic catalyst. Because the sol-gel method makes it possible to obtain fine oxide particles that are spherical and that are of comparatively well-matched particle diameters, it is preferred. For example, synthesis of silica particles by the sol-gel method may be carried out by precisely controlled method(s) described at Nonpatent Reference No. 1 and/or Nonpatent Reference No. 2. The methods of these references, because they do not require processes necessitating long periods of time during which a metal alkoxide is made to drip into a water-containing organic solvent but permit the metal alkoxide and water to be mixed all at once, involve simpler processes and make it possible to synthesize oxide particles using simpler experimental equipment.

### Nonpatent Reference No. 1

Controlled Growth of Monodisperse Silica Spheres in the Micron Size Range.(1968)Journal of Colloid and Interface Science,26,62-69.

### Nonpatent Reference No. 2

Influence of the initial chemical conditions on the rational design of silica particles.(2018) Journal of Sol-Gel Science and Technology,88,430-441.

So long as it is a compound that can be used to manufacture oxide particles by a reaction in accordance with the sol-gel method, there is no particular limitation with respect to the metal alkoxide(s) used for synthesis of the oxide particles, it being possible for this to be selected and employed as appropriate in accordance with the type(s) of oxide particles that are to be manufactured. More specifically, as silicon alkoxides, methyltrimethoxysilane, methyltriethoxysilane, tetramethoxysilane, tetraethoxysilane, tetraisopropoxysilane, tetrabutoxysilane, and so forth may be cited as examples. Of these, because they can be easily obtained industrially and because of their ease in handling, tetramethoxysilane and tetraethoxysilane are preferred.

### Catalyst

As the catalyst used for synthesis of the oxide particles, it is possible to use known catalysts which may be used in the sol-gel method, and it is possible to use either acidic or basic catalysts. Thereamong, from the standpoint of ease of obtaining spherical particles with well-matched particle diameters, use of basic catalysts is preferred. Note, however, that whereas with the sol-gel method it is sometimes the case that hydrolysis is first carried out in preliminary fashion in the presence of an acidic catalyst and growing of particles is carried out thereafter, in accordance with the present invention, without excluding the possibility of use of an acidic catalyst at the time of such preliminary hydrolysis, the method may be such that a basic catalyst is used during growing of particles. As basic catalysts that may be used in accordance with the present invention, amine compounds, alkali metal hydroxides, and so forth may be cited as examples. In particular, in view of the fact they make it possible to obtain oxide particles of high purity in which the amount of impurities contained therein in the form of metal(s) other than the metal element(s) which make up the target oxide particles is small, use of amine compounds is preferred. As such amine compounds, ammonia, methylamine, dimethylamine, trimethylamine, ethylamine, diethylamine, triethylamine, and so forth may be cited as examples. Thereamong, in view of the fact that its volatility is high and that it is easy to remove following synthesis, use of ammonia is more preferred. Note that any one of the foregoing basic catalysts may be used alone, or two or more thereof may be used together. The foregoing basic catalysts are such that any thereamong that are capable of being obtained industrially may be used in the same form in which they are sold; or, e.g., as is the case with aqueous ammonia and the like, they may be diluted with water and/or organic solvent(s) before being used. In particular, because it will facilitate control of the rate at which reaction proceeds, it is more preferred that the basic catalyst be diluted with water and that an aqueous solution, the concentration of which can be adjusted as necessary, be used. From the standpoints of ease with which it can be obtained industrially, ease with which adjustment of concentration can be carried out, and so forth, where an aqueous solution is employed as basic catalyst, it is preferred that the concentration thereof be within a range that is 1 mass% to 30 mass%. The fractional amount of basic catalyst used may be chosen as appropriate based upon considerations such as reaction rate of the polycondensation reaction, hydrolysis of the metal alkoxide, and so forth.

### Solvent

As solvent which may be used in the foregoing polycondensation reaction and/or hydrolysis of the metal alkoxide in accordance with the present invention, it being possible to use any desired polar solvent such as may be used in the sol-gel method, this may be water or an organic solvent which is capable of causing water to be dissolved therein in any desired fractional ratio. Besides the possible presence of water, a mixture of two or more organic solvents may be used, in which case the organic solvents following mixture may satisfy the foregoing conditions. As polar solvents other than water, methanol, ethanol, isopropyl alcohol, butanol, and other such alcohols, diethyl ether, tetrahydrofuran, dioxane, and other such ethers, dimethylformamide, dimethylacetamide, and N-methylpyrrolidone, and other such amides, and so forth may be cited as specific examples. Because alcohol is a byproduct of the reaction in accordance with the sol-gel method, in view of the fact that it will make it possible to reduce the possibility that impurities will be introduced into the liquid dispersion following the reaction, of the foregoing organic solvents, use of methanol, ethanol, isopropyl alcohol, butanol, and/or other such alcohol(s) is more preferred.

While addition of water is required for the sol-gel method, where as described above water is added in the form of an aqueous solution employed as basic catalyst, or where water is employed as all or part of the solvent, it is possible for all or part thereof to be used as the water required for the reaction. The fractional amount of water which is used may be chosen as appropriate in correspondence to the particle diameter(s) of the oxide particles that are to be manufactured.

### Reaction Conditions

If metal alkoxide and basic catalyst mixture time is too short, there is a tendency for the width of the particle diameter distribution to be too large; if this is too long, there is a tendency to be unable to achieve stable particle growth. Regarding reaction temperature, there being no limitation with respect thereto so long as it is a temperature such as will permit the reaction in accordance with the sol-gel method to proceed quickly, this may be chosen as appropriate in correspondence to the particle diameter(s) of the target oxide particles. In general, there is a tendency for the size of the particle diameter of the oxide particles which are obtained to increase with decreasing reaction temperature. Furthermore, to definitively cause the reaction in accordance with the sol-gel method to proceed, this may be made to pass through a thermal aging operation following completion of dripping of the basic catalyst and metal alkoxide. What is referred to here as a thermal aging operation means allowing some time to pass before the subsequent addition of surface modification treatment agent. In such case, it is preferred that the temperature at which thermal aging is carried out be a temperature that is on the same order as the reaction temperature. Furthermore, to obtain oxide particles of desired particle diameter(s), it is possible following thermal aging to employ techniques such as carrying out further addition of metal alkoxide and basic catalyst and causing growth of the particle diameter of the oxide particles.

### Surface Treatment Operation

In accordance with the present invention, addition of surface treatment agent in the form of at least one species selected from among the group consisting of silicone oil, silane coupling agent, and silazane to the liquid dispersion of oxide particles obtained in accordance with the aforementioned method will permit surface treatment of the oxide particles to be carried out. As silicone oil, known silicone oils such as are ordinarily used in surface treatment of oxide particles are capable of being used without any particular restriction. More specifically, dimethyl silicone oil, methylphenyl silicone oil, methylhydrogen silicone oil, alkyl-modified silicone oil, amino-modified silicone oil, epoxy-modified silicone oil, carboxyl-modified silicone oil, carbinol-modified silicone oil, methacryl-modified silicone oil, polyether-modified silicone oil, fluorosilicone oil, and so forth may be chosen as appropriate and used.

As the silane coupling agent, methyltrimethoxysilane, methyltriethoxysilane, hexyltrimethoxysilane, decyltrimethoxysilane, phenyltriethoxysilane, vinyltrimethoxysilane, vinyltriethoxysilane, 3-methacryloyloxypropyltrimethoxysilane, 3-methacryloyloxypropyltriethoxysilane, 3-acryloyloxytrimethoxysilane, 3-glycidoxypropyltrimethoxysilane, 3-glycidoxypropyltriethoxysilane, 3-aminopropyltrimethoxysilane, 3-aminopropyltriethoxysilane, N-(2-aminoethyl)-3-aminopropyltrimethoxysilane, N-(2-aminoethyl)-3-aminopropylmethyldimethoxysilane, N-phenyl-3-aminopropyltrimethoxysilane, N,N-dimethyl-3 -aminopropyltrimethoxysilane, N,N-diethyl-3 -aminopropyltrimethoxysilane, 4-styryltrimethoxysilane, trimethoxy(3,3,3,-trifluoropropyl)silane, octyltrimethoxysilane, octyltriethoxysilane, and so forth may be cited as specific examples.

As the silazane, known silazanes such as are ordinarily used in surface treatment may be used without any particular restriction. As a specific example of a silazane, from the standpoints of its good reactivity and its good handling characteristics, use of 1,1,1,3,3,3-hexamethyldisilazane (HMDS) is preferred. For example, as a method of using HMDS to synthesize hydrophobic silica, synthesis may be carried out in accordance with the precisely controlled method(s) described at Nonpatent Reference No. 3.

### Nonpatent Reference No. 3

Surface chemistry and trimethylsilyl functionalization of Stober silica sols. (2003) Journal of Non-Crystalline Solids,316,349-363.

One of the aforementioned surface treatment agents may be used alone, or two or more thereof may be used in combination. Of these surface treatment agents, because it will permit attainment of good flow characteristics at the oxide particles that are obtained following surface treatment, use of at least one species selected from among the group consisting of silane coupling agent and silazane is preferred, and use of silazane is more preferred.

There is no particular restriction with respect to the method used to add the surface treatment agent. Where the surface treatment agent is a low-viscosity liquid at normal temperature and normal pressure, while this may be dripped into the liquid suspension or sprayed into the liquid suspension, from the standpoint of ease of maneuverability, dripping is preferred. Where the surface treatment agent is a high-viscosity liquid or a solid, it may be diluted with a suitable organic solvent and then added in similar manner as when it is a low-viscosity liquid. Where the surface treatment agent is a gas, it may be added by causing it to be blown into the liquid suspension in the form of fine bubbles. Treatment temperature and treatment time for carrying out surface treatment may be chosen as appropriate based upon considerations such as the reactivity of the surface treatment agent which is used.

In accordance with the present invention, as indicator of the fractional degree to which modification by functional group(s) having water-repellent and/or oil-repellent characteristics has occurred at the surfaces of the hydrophobic oxide particles, results of measurements carried out using an x-ray photoelectron spectroscopic apparatus (ESCA) may be utilized. More specifically, the atomic percent composition at a depth domain of on the order of 10 nm can be determined to compare the fractional percentages of particular type(s) of atom(s), e.g., carbon atoms, that make up functional group(s) having water-repellent and/or oil-repellent characteristics. In accordance with the present invention, from the standpoint of ability to exhibit superior water-repellent and/or oil-repellent characteristics, e.g., in the case of hydrophobic silica at which a trimethylsilyl group has been introduced, it is preferred that the fractional percent of carbon atoms be not less than 9 at%. Not less than 12 at% is even more preferred. While it is preferred that the fractional percent of carbon atoms is large, it is usually not greater than 50 at%, and there is no objection to this being not greater than 30 at%.

### Components Within Coating Layer

A coating layer in accordance with the present invention may contain component(s) other than the foregoing hydrophobic oxide particles. Binder components, antioxidants, light-resistant agents, antigelling agents, organic wetting agents, antistatic agents, ultraviolet light absorbers, surface active agents, and so forth may be cited as specific examples, it being possible for such component(s) to be present as appropriate where necessary.

There is no particular limitation with respect to such binder components so long as they are capable of causing the hydrophobic oxide particles to be well-bound. For example, alkylalkoxysilane, alkoxysilane, perhydropolysilazane, polysilazane, polyzirconoxane, polyaluminoxane, polytitanoxane, siloxane-type inorganic macromolecules typified by polysiloxane (including organopolysiloxane, dimethylpolysiloxane, and the like), and so forth may be used, polysiloxane, polysilazane, perhydropolysilazane, alkoxysilane, and alkylalkoxysilane being preferred. Thereamong, from the standpoint of causing the hydrophobic oxide particles of the present invention to be well-bound, it is more preferred that this be polysiloxane. In terms of commercially available substances, Colcoat (registered trademark) PX manufactured by Colcoat Co., Ltd., which is a siloxane-type inorganic macromolecule may be favorably employed. It is preferred that binder component(s) in accordance with the present invention be such that a method is employed in which an inorganic macromolecule is formed by a thermosetting reaction employing sol-gel method(s). Such inorganic macromolecule is such that a metal alkoxide which is the precursor thereof is used as starting material, a solution thereof being made to undergo hydrolysis and polycondensation, following which moisture from the air or the like is used to cause polycondensation and gelatinization. The aforementioned metal alkoxide might be used in such fashion that it is diluted with one solvent mixed uniformly with water or with a mixture of two or more solvents, this sol solution being applied to a substrate, and being made to evaporate at normal temperature or by heating such that the curing reaction proceeds and a film is formed. In accordance with the present invention, the polysiloxane might be a reaction product for which a metal alkoxide is employed as starting material, and might be modified through use of addition reaction(s) and/or the like.

While the hydrophobic oxide particles within the coating layer may be used in any desired fractional ratio such as will permit attainment of water-repellent and/or oil-repellent characteristics at the laminated film, it is preferred in terms of solids content that this be 30 mass% to 100 mass% of the coating layer. It is more preferred that this be 50 mass% to 100 mass%. Use of hydrophobic oxide particles in the foregoing fractional ratio will make it possible to attain superior water-repellent and/or oil-repellent characteristics at the laminated film.

### Coating Solution

In accordance with the present invention, a laminated film is obtained by causing a coating layer to be laminated, directly or indirectly by way of other layer(s), over a substrate film. As the coating solution for causing formation of this coating layer, while it is possible to use the liquid dispersion of hydrophobic oxide particles prepared in accordance with the aforementioned method as is, binder component(s) and/or any of other such various component(s) that will form the foregoing coating layer and/or suitable solvent(s) may be used alone or two or more thereof may be present therein.

The hydrophobic oxide particles of the present invention may be such that the liquid dispersion is used as is without use of binder component(s). Because it is ordinarily the case that a silica sol used alone will not have coating-forming characteristics, where a silica sol liquid dispersion is to be used for the purpose of coating, it must be used in combination with a binder resin or the like. However, as fine monodispersed particles may form surfaces with suitable cohesive forces, because hydrophobic oxide particles in accordance with the present invention will have coating-forming characteristics even when used alone, it is possible for the coating solution to be such that the liquid dispersion of hydrophobic oxide particles is used as is.

### Laminated Film Manufacturing Operation

There is no particular restriction with respect to the method by which coating is carried out during manufacture of laminated film in accordance with the present invention. For example, manufacture may be carried out in accordance with roll coating, gravure coating, bar coating, doctor blade coating, spin coating, spray coating, brush coating, and/or other such known method(s). There is no particular limitation with respect to the solvent(s) used when carrying out coating in accordance with such method(s), it being possible, for example, to use any suitably chosen from among water, alcohols, ketones, normal hexane, cyclohexane, toluene, butyl acetate, glycols, and other such organic solvents. Any one such solvent may be used alone, or a mixture of two or more thereof may be used. The amount of hydrophobic oxide particles dispersed in solvent may be chosen so as to be any desired fractional ratio such as will permit attainment of a uniform dispersion. While the method(s) employed to carry out drying following coating may be such that either natural drying or drying with application of heat is employed, from the standpoint of industrial manufacture, drying with application of heat is preferred. While there is no limitation with respect to the drying temperature so long as it is within a range that does not affect the components present within the coating layer or the substrate film, it is ordinarily preferred that this be not greater than 200° C, and more preferred that this be not less than 50° C but not greater than 160° C. There being no limitation with respect to the drying method, it is possible to use a hot plate, hot air oven, and/or other such known method(s) of drying a film. Drying time may be chosen as appropriate based on drying temperature and other such conditions, it being sufficient that this be within a range such as will not affect the components present within the coating layer or the substrate film.

### Water-Repellent and/or Oil-Repellent Characteristics

The water-repellent and/or oil-repellent characteristics of a laminated film in accordance with the present invention may be evaluated by known method(s). More specifically, water-repellent characteristics may be evaluated with a goniometer using water, and oil-repellent characteristics may be evaluated with a goniometer using diiodomethane. In accordance with the present invention, the preferred range of contact angles for water is not less than 90°, and it is more preferred that this be not less than 120°. A contact angle for water of not less than 90° is preferred because it will allow superior water-repellent characteristics to be exhibited; not less than 120° is more preferred because it is indicative of water-repellent characteristics equivalent to or better than those of conventional fluororesin sheeting as typified by polytetrafluoroethylene (PTFE). Furthermore, in accordance with the present invention, the preferred range of contact angles for diiodomethane is not less than 60°, not less than 90° being more preferred. A contact angle for diiodomethane of not less than 60° is preferred from the standpoint of imparting oil-repellent characteristics such as will make it possible to reduce oily dirt and so forth; not less than 90° is more preferred because it is indicative of oil-repellent characteristics equivalent to or better than those of conventional fluororesin sheeting. Regarding the contact angle for water and the contact angle for diiodomethane, as it can be said for each that it will be so much the better the higher that these are, no particular upper limit is imposed thereon. Under most circumstances it can be said that the most preferred situation will have been achieved if droplets do not adhere to the coating layer, and the contact angle is so large as to prevent a contact angle from being clearly exhibited.

### Transparency

It being preferred of a laminated film in accordance with the present invention that it be of high transparency, a film haze of not greater than 20% is preferred. Not greater than 15% is more preferred, and not greater than 10% is even more preferred. Because a film haze of not greater than 20% will also permit deployment in applications requiring esthetic aspects with respect to contents and/or transparency, this is preferred.

### WORKING EXAMPLES

Although the present invention is described below in more specific terms by way of working examples and comparative examples, the present invention is not to be limited by these working examples. Moreover, the various measurements were carried out as follows.

### Measurement of Contact Angle

Contact angles of solutions on the film that was prepared were measured. A DM-701 fully automatic goniometer manufactured by Kyowa Interface Science Co., Ltd., was used to measure contact angle. Pure water and diiodomethane were used as measurement solutions. Measurement of the contact angle of water (abbreviated as "WCA") was such that a 1.8 µL droplet of water was dripped thereon, measurement being carried out 60 seconds thereafter. Measurement of the contact angle of diiodomethane (abbreviated as "DCA") was such that a 0.9 µL droplet of diiodomethane was dripped thereon, measurement being carried out 30 seconds thereafter.

### Measurement of Haze

Film haze was measured using an NDH-5000 manufactured by Nippon Denshoku Industries Co., Ltd.

### Measurement of Average Primary Particle Diameter

Average primary particle diameter of hydrophobic oxide particles was measured by observation using a scanning electron microscope or transmission electron microscope. The average of the diameters of 20 arbitrarily selected particles observed using such a microscope was taken to be the average primary particle diameter. The average primary particle diameter of particles of irregular shape may be calculated based on the equivalent circular diameters thereof. Equivalent circular diameter is calculated by dividing the observed area of the particle by π, taking the square root of this, and multiplying the result by two.

### ESCA Measurement of Hydrophobic Silica Nanoparticles

A hydrophobic silica nanoparticle liquid suspension was dripped onto clean aluminum foil and dried to cause formation of a hydrophobic silica nanoparticle thin film on the aluminum foil. At such time, to prevent occurrence of surface contamination to the maximum extent possible, this was quickly dried and promptly subjected to sampling and made available for analysis of the surface composition.

The device used was a K-Alpha⁺ (manufactured by Thermo Fisher Scientific). Detailed conditions under which measurement was performed are indicated below. During analysis, note that background elimination was carried out in accordance with the Shirley method. Furthermore, with respect to surface percent compositions, averages of results of measurement of not less than 3 locations at which substrate Al was not detected were employed.

### Measurement Conditions

X-ray excitation: Monochromatic Al Kα radiation
X-ray output: 12 kV; 6 mA
Photoelectron escape angle: 90°
Spot size: 400 µm φ
Path energy: 50 eV
Step size: 0.1 eV

### Working Example 1

### Hydrophobic Silica Particle Liquid Suspension

Surface treatment of monodispersed silica particles of average primary particle diameter 35 nm was carried out using 1,1,1,3,3,3-hexamethyldisilazane (HMDS) to obtain a uniformly suspended hydrophobic silica particle liquid suspension at which surface modification had been carried out through introduction of trimethylsilyl groups. This silica is referred to as Silica A below. The average primary particle diameter of Silica A was 50 nm.

### Preparation of Coating Film

This Silica A liquid suspension was mixed with Colcoat (registered trademark) PX (manufactured by Colcoat Co., Ltd.) to prepare a coating solution. This was prepared so as to obtain a mixture ratio of Colcoat (registered trademark) PX : silica = 1 : 2 (solids content mass ratio). Using a #6 bar coater, this coating solution was applied in accordance with the bar coating technique to the corona-treated face of a Toyobo Ester (registered trademark) film (Product No.: E5100; thickness: 75 µm), which was a film made of polyethylene terephthalate (abbreviated as PET), following which this was dried for 1 minute at 130° C to obtain a coating film.

### Working Example 2

Except for the fact that the coating solution at Working Example 1 was instead prepared so as to obtain a mixture ratio between Colcoat (registered trademark) PX and silica which was such that Colcoat (registered trademark) PX : silica = 1 : 64, this was carried out in similar fashion as at Working Example 1 to obtain a coating film.

### Comparative Example 1

Uncoated E5100 PET film was used as Comparative Example 1. The corona-treated face thereof was used for measurement of contact angle.

### Comparative Example 2

Using a #6 bar coater, Colcoat (registered trademark) PX was applied in accordance with the bar coating technique to the corona-treated face of E5100 PET film, following which this was dried for 1 minute at 130° C to obtain a coating film.

### Comparative Example 3

Hydrophobic silica in the form of commercially available Aerosil (registered trademark) R812S (manufactured by Evonik Industries; average primary particle diameter 7 nm), which had trimethylsilyl groups at the surfaces thereof, was used. This silica is referred to as Silica B below. Silica B was subjected to agitation and dispersed within ethanol so as to obtain a solids concentration of 6 mass% to obtain a liquid dispersion. Except for the fact that this Silica B liquid dispersion was instead used, this was carried out in similar fashion as at Working Example 1 to prepare a coating solution and obtain a coating film.

Results of measurement of films obtained at the working examples and comparative examples are shown in TABLE 1.

**TABLE 1**

| | Silica particles | Binder component: Silica particles (solids content mass ratio) | Contact angle (°) | | Haze (%) |
|---|---|---|---|---|---|
| | | | Water | Diiodomethane | |
| Working Example 1 | A | 1 :2 | 99.1 | 68.8 | 6.5 |
| Working Example 2 | A | 1 :64 | Contact angle was so large that droplets did not adhere thereto | | 7.3 |
| Comparative Example 1 | - | No coating layer | 52.3 | 25.0 | 6.8 |
| Comparative Example 2 | - | No silica particles | 32.4 | 42.6 | 6.3 |
| Comparative Example 3 | B | 1 :2 | 126.9 | 51.4 | 22.3 |

As shown in TABLE 1, it is clear that Working Examples 1 and 2 had superior water-repellent and oil-repellent characteristics, as the contact angle for water and the contact angle for diiodomethane thereat were each larger than when only substrate was used at Comparative Example 1 and when coating was carried out with only Colcoat (registered trademark) PX at Comparative Example 2. In particular, it is clear that Working Example 2, at which the fractional amount of silica was large, had extremely superior water-repellent and oil-repellent characteristics, since droplets did not adhere to the film surface during measurement of contact angle. Moreover, as compared with Comparative Examples 1 and 2, it is clear that Working Examples 1 and 2 also had superior transparency, as the haze values thereof did not increase dramatically.

At Comparative Example 3, while the contact angle for water was superior, as the contact angle for diiodomethane was low, it was not possible to simultaneously achieve both water-repellent and oil-repellent characteristics. Furthermore, as the haze value was extremely high, it is clear that coating caused a loss in transparency.

Furthermore, results of ESCA analysis of surfaces with only Silica A or Silica B are shown in TABLE 2.

**TABLE 2**

| | Si | C | O | Al |
|---|---|---|---|---|
| Silica A | 29.8 | 15.6 | 54.6 | <0.1 |
| Silica B | 33.0 | 8.4 | 58.6 | <0.1 |

| | | | | |
|---|---|---|---|---|
| (Units: at%) | | | | |

Silica A and Silica B were both hydrophobic silica particles, the surfaces of which were modified with trimethylsilyl groups. As shown in TABLE 2, the value for the fractional percentage of carbon, which serves as an indicator of trimethylsilyl groups, is higher at Silica A than it is at Silica B. The amount of trimethylsilyl groups at the surfaces of the particles was therefore greater for Silica A than for Silica B, and one might well expect as shown in TABLE 1 that the results would indicate that water-repellent and oil-repellent characteristics would be more superior when Silica A is used.

### INDUSTRIAL UTILITY

The present invention makes it possible to provide a transparent laminated film which has superior water-repellent and/or oil-repellent characteristics and which exhibits antifouling characteristics. A laminated film in accordance with the present invention is useful because it can be expected to have applications as a film for packaging, covering, mold release, and so forth.

### EXPLANATION OF REFERENCE NUMERALS

- 1:: Substrate film
- 2:: Coating layer comprising binder component(s) and hydrophobic oxide particles
- 3:: Hydrophobic oxide particles
- 4:: Optional resin layer that does not contain hydrophobic oxide particles

## Claims

1. A laminated film in which a coating layer is laminated, directly or indirectly by way of another layer, over a substrate film, the laminated film being such that the coating layer is an outermost layer on at least one face of the laminated film, and hydrophobic oxide particles of average primary particle diameter not less than 10 nm but not greater than 300 nm are present in the coating layer in an amount that in terms of solids content is not less than 30 mass% but not greater than 100 mass%.

2. The laminated film according to claim 1 wherein the hydrophobic oxide particles are hydrophobic silica.

3. The laminated film according to claim 1 or 2 wherein in terms of solids content the hydrophobic oxide particles within the coating layer are 50 mass% to 100 mass% thereof.

4. The laminated film according to any of claims 1 through 3 wherein the coating layer contains a siloxane-type inorganic macromolecule.

5. The laminated film according to any of claims 1 through 4 wherein a contact angle of diiodomethane measured at a surface of the coating layer is not less than 60°.

6. The laminated film according to any of claims 1 through 5 wherein haze is not greater than 20%.
